# FASCICULE DE BREVET EUROPEEN

(11) **EP 3 417 541 B1**
(45) Date de publication et mention de la délivrance du brevet: **10.06.2020**
(21) Numéro de dépôt: 17707488.7
(22) Date de dépôt: 14.02.2017
(51) Int. Cl.: H02P 27/06

(54) **DISPOSITIF DE COMMANDE D'UN ONDULEUR, INSTALLATION ÉLECTRIQUE COMPORTANT UN TEL DISPOSITIF, PROCÉDÉ DE COMMANDE D'UN ONDULEUR ET PROGRAMME D'ORDINATEUR CORRESPONDANT**
VORRICHTUNG ZUR STEUERUNG EINES WECHSELRICHTERS, ELEKTRISCHE ANLAGE MIT SOLCH EINER VORRICHTUNG, VERFAHREN ZUR STEUERUNG EINES WECHSELRICHTERS UND ENTSPRECHENDES COMPUTERPROGRAMM
DEVICE FOR CONTROLLING AN INVERTER, ELECTRICAL INSTALLATION INCLUDING SUCH A DEVICE, METHOD FOR CONTROLLING AN INVERTER AND CORRESPONDING COMPUTER PROGRAM

(30) Priorité: 17.02.2016 FR 1651265
(43) Date de publication de la demande: 26.12.2018
(73) Titulaire: Valeo Siemens eAutomotive France SAS, 95800 Cergy (FR)
(72) Inventeur: CHAUVENET, Pierre-Alexandre, 95800 Cergy (FR)
(74) Mandataire: Argyma
(86) Numéro de dépôt international: PCT/EP2017/053291
(87) Numéro de publication internationale: WO 2017/140676

(56) Documents cités:
- EP-A1- 2 790 315
- EP-A2- 2 887 539
- Paul Sandulescu: "Modélisation et commande d'unsys emè a trois phases indépendante a double fonctionnalité : Tractio Electrique et Chargeur Forte Puissance pour application automobile", , 6 septembre 2013 (2013-09-06), pages 1-194, XP055313543, Extrait de l'Internet: URL:https://pastel.archives-ouvertes.fr/pa stel-00912564 [extrait le 2016-10-25] cité dans la demande

## Description

### DOMAINE TECHNIQUE

La présente invention concerne la commande de moteurs électriques.

### ARRIÈRE-PLAN TECHNOLOGIQUE

La thèse de Paul Sandulescu intitulée « Modélisation et commande d'un système à trois phases indépendantes à double fonctionnalité : Traction Électrique et Chargeur Forte Puissance pour application automobile » soutenue le 6 septembre 2013 à l'école des Arts et Métiers ParisTech décrit un dispositif de commande d'un onduleur destiné à être connecté à un moteur présentant trois phases destinées à se voir respectivement appliquer trois tensions de phase, les trois tensions de phase définissant un espace vectoriel dont chaque tension de phase forme une dimension. L'onduleur est conçu pour prendre plusieurs états dans chacun desquels il est conçu pour appliquer des tensions de phase prédéterminées sur les phases du moteur, les tensions de phase prédéterminées de chaque état de l'onduleur formant un vecteur prédéterminé dans l'espace vectoriel.

Deux méthodes de commande sont décrites.

Dans la première méthode de commande, appelée MLI vectoriel Z-SVM, le dispositif de commande est destiné à placer l'onduleur uniquement dans des états associés à des vecteurs prédéterminés formés chacun par des tensions de phase prédéterminées dont la somme est nulle (c'est-à-dire non-homopolaires). En utilisant de tels vecteurs prédéterminés, cette première méthode de commande permet de s'assurer que les tensions de phase ne présentent aucune composante homopolaire. Cependant, il n'est pas possible d'appliquer une composante homopolaire au moteur.

Dans la deuxième méthode de commande, appelée MLI intersective 3 niveaux, tous les vecteurs pouvant être obtenus par les états de l'onduleur sont utilisables. Ces vecteurs sont au nombre de 27. Selon cette méthode de commande, pendant un temps prédéterminé (appelé une période MLI), quatre de ces vecteurs sont utilisés : il s'agit des quatre vecteurs formant un tétraèdre contenant le vecteur consigne. Cette deuxième méthode de commande est plus souple que la première, puisqu'elle permet d'appliquer une composante homopolaire au moteur, ce qui est parfois utile. Cependant, lorsque la consigne n'est pas homopolaire, il peut arriver qu'une composante homopolaire parasite soit tout de même appliquée au moteur.

L'invention a pour but de proposer un dispositif de commande d'un onduleur permettant de remédier, au moins en partie, aux inconvénients précédents.

### RÉSUMÉ DE L'INVENTION

À cet effet, il est proposé un dispositif de commande d'un onduleur destiné à être connecté à un moteur présentant N phases destinées à se voir respectivement appliquer N tensions de phase, les N tensions de phase définissant un espace vectoriel dont chaque tension de phase forme une dimension, N étant supérieur ou égal à trois, l'onduleur étant conçu pour prendre plusieurs états dans chacun desquels il est conçu pour appliquer des tensions de phase prédéterminées sur les phases du moteur, les tensions de phase prédéterminées de chaque état de l'onduleur formant un vecteur prédéterminé dans l'espace vectoriel, le dispositif de commande comportant :
- une unité pour recevoir, pour un intervalle de temps, des consignes de tension de phase formant un vecteur de consigne dans l'espace vectoriel,
- une unité pour sélectionner au moins N+1 états de l'onduleur associés à respectivement au moins N+1 vecteurs prédéterminés définissant un volume dans l'espace vectoriel contenant le vecteur de consigne,
- une unité pour commander l'onduleur, sur l'intervalle de temps, pour le placer successivement dans les états sélectionnés, afin qu'il applique sensiblement, en moyenne sur l'intervalle de temps, les consignes de tension de phase,
le dispositif de commande étant caractérisé en ce que la sélection des au moins N+1 états de l'onduleur est réalisée parmi des groupes d'au moins N+1 états de l'onduleur, les au moins N+1 états de l'onduleur d'au moins un des groupes étant associés à respectivement au moins N+1 vecteurs prédétermines dont au moins N sont formés par des tensions de phase prédéterminées de somme nulle et dont au moins un est formé par des tensions de phase prédéterminées de somme non nulle.

Dans l'espace vectoriel, les vecteurs non-homopolaires (formés par des tensions de phase de somme nulle) sont tous placés dans un plan, appelé plan de Concordia. Grâce à l'invention, lorsque le vecteur de consigne ne comporte pas de composante homopolaire, il est possible de le réaliser avec les N vecteurs prédéterminés formés par des tensions de phase prédéterminées de somme nulle, car ces au moins N vecteurs prédéterminés délimitent une partie du plan de Concordia. Ainsi, puisqu'aucun vecteur prédéterminé homopolaire n'est utilisé pour générer le vecteur de consigne, le risque d'appliquer une composante homopolaire parasite au moteur est réduit. En outre, la présence du au moins un vecteur prédéterminé homopolaire (c'est-à-dire formé par des tensions de phases prédétermines de somme non nulle) permet, si besoin, de générer un vecteur de consigne présentant une composante homopolaire.

De façon optionnelle, chaque groupe comporte un état de l'onduleur associé au vecteur nul de l'espace vectoriel pour lequel les tensions de phase prédéterminées sont toutes nulles.

De façon optionnelle également, les volumes définis par les vecteurs prédéterminés associés aux états de l'onduleur des groupes ne se chevauchent pas.

De façon optionnelle également, chaque groupe d'états de l'onduleur comporte exactement N+1 états de l'onduleur.

De façon optionnelle également, au moins un groupe d'états de l'onduleur comporte exactement N-1 états associés respectivement à N-1 vecteurs prédéterminés formés chacun par des tensions de phase prédéterminées dont la somme est nulle.

De façon optionnelle également, N est égal à trois.

Il est également proposé une installation électrique comportant :
- un onduleur destiné à être connecté à un moteur présentant N phases destinées à se voir respectivement appliquer N tensions de phase, les N tensions de phase définissant un espace vectoriel dont chaque tension de phase forme une dimension, N étant supérieur ou égal à trois, l'onduleur étant conçu pour prendre plusieurs états dans chacun desquels il est conçu pour appliquer des tensions de phase prédéterminées sur les phases du moteur, les tensions de phase prédéterminées de chaque état de l'onduleur formant un vecteur prédéterminé dans l'espace vectoriel,
- un dispositif de commande de l'onduleur, selon l'invention.

De façon optionnelle, l'onduleur comporte :
- une première borne et une deuxième borne entre lesquelles une tension continue est destinée à être appliquée,
- pour chaque extrémité de phase, un bras de commutation comportant deux interrupteurs connectés l'un à l'autre en un point milieu auquel l'extrémité de phase considérée est destinée à être connectée, un premier interrupteur étant connecté à la première borne, le deuxième interrupteur étant connecté à la deuxième borne,
chaque interrupteur étant conçu pour prendre un état ouvert et un état fermé, chaque état de l'onduleur étant défini par une combinaison d'états des interrupteurs.

Il est également proposé un procédé de commande d'un onduleur destiné à être connecté à un moteur présentant N phases, destinées à se voir respectivement appliquer N tensions de phase, les N tensions de phase définissant un espace vectoriel dont chaque tension de phase forme une dimension, N étant supérieur ou égal à trois, l'onduleur étant conçu pour prendre plusieurs états dans chacun desquels il est conçu pour appliquer des tensions de phase prédéterminées sur les phases du moteur, les tensions de phase prédéterminées de chaque état de l'onduleur formant un vecteur prédéterminé dans l'espace vectoriel, le procédé de commande comportant :
- recevoir, pour un intervalle de temps, des consignes de tension de phase formant un vecteur de consigne dans l'espace vectoriel,
- sélectionner au moins N+1 états de l'onduleur associés à respectivement au moins N+1 vecteurs prédéterminés définissant un volume dans l'espace vectoriel contenant le vecteur de consigne,
- commander l'onduleur, sur l'intervalle de temps, pour le placer successivement dans les états sélectionnés, afin qu'il applique sensiblement, en moyenne sur l'intervalle de temps, les consignes de tension de phase,
le procédé de commande étant caractérisé en ce que la sélection des au moins N+1 états de l'onduleur est réalisée parmi des groupes d'au moins N+1 états de l'onduleur, les au moins N+1 états de l'onduleur d'au moins un des groupes étant associés à respectivement au moins N+1 vecteurs prédéterminés dont au moins N sont formés par des tensions de phase prédéterminées de somme nulle et dont au moins un est formé par des tensions de phase prédéterminées de somme non nulle.

Il est également proposé un programme d'ordinateur comprenant des instructions qui conduisent l'installation électrique à exécuter les étapes de la méthode

### DESCRIPTION DES FIGURES

La figure 1 est un schéma électrique d'une installation électrique mettant en œuvre l'invention.
La figure 2 est une vue, dans l'espace vectoriel des tensions de phase, des tensions de phase prédéterminées pouvant être appliquées par un onduleur de l'installation électrique de la figure 1.
La figure 3 est un schéma-blocs illustrant les étapes d'un procédé de commande d'onduleur mettant en œuvre l'invention.
La figure 4 est un chronogramme de courants de phase dans un moteur électrique alimenté par un onduleur commandé suivant une méthode de l'état de la technique.
La figure 5 est un chronogramme de courants de phase dans un moteur électrique alimenté par un onduleur commandé suivant l'invention.

### DESCRIPTION DÉTAILLÉE

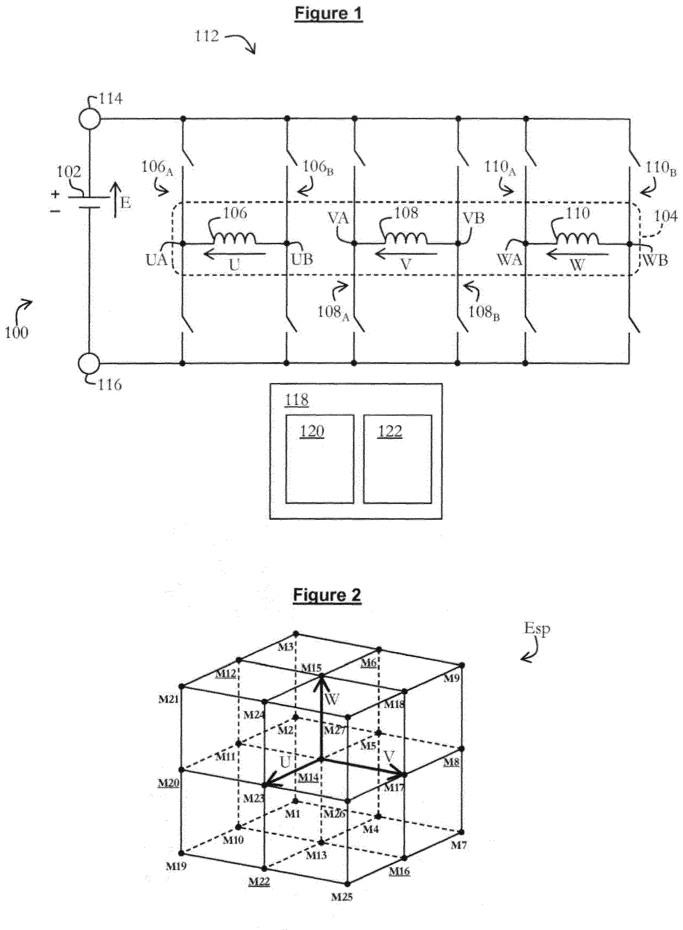

En référence à la figure 1, une installation électrique 100 mettant en œuvre l'invention va à présent être décrite.

Cette installation électrique 100 est par exemple destinée à être installée dans un véhicule automobile.

L'installation électrique 100 comporte tout d'abord une batterie 102 présentant une borne négative - et une borne positive + et fournissant, entre ces bornes, une tension E continue. La borne négative - de la batterie 102 est généralement connectée à une masse électrique, par exemple un châssis du véhicule automobile.

L'installation électrique 100 comporte en outre un moteur électrique 104 présentant un rotor (non représenté) conçu pour tourner par rapport à un stator (non représenté) par exemple pour entraîner des roues du véhicule automobile. Le moteur électrique 104 comporte trois phases 106, 108, 110 formées d'enroulements inductifs. Les trois phases 106, 108, 110 présentent chacune deux extrémités entre lesquelles des tensions de phase U, V, W sont destinées à être appliquées. Les phases 106, 108, 110 sont par exemple des phases statoriques du moteur électrique 104. Le moteur électrique 104 est par exemple un moteur asynchrone.

L'installation électrique 100 comporte en outre un onduleur 112 connectant la batterie 102 au moteur électrique 104.

Plus précisément, l'onduleur 112 comporte deux bornes 114, 116 connectées dans l'exemple décrit respectivement à la borne positive + et à la borne négative - de la batterie 102.

L'onduleur 112 comporte en outre, pour chaque extrémité de phase, un bras de commutation 106A, 106B, 108A, 108B, 110A, 110B comportant deux interrupteurs connectés l'un à l'autre en un point milieu UA, UB, VA, VB, WA, WB auquel l'extrémité de phase considérée est connectée. Parmi les deux interrupteurs, un premier interrupteur, appelé interrupteur de côté haut, est connecté à la première borne 114, tandis que le deuxième interrupteur, appelé interrupteur de côté bas, est connecté à la deuxième borne 116. Chaque interrupteur comporte par exemple un transistor, tel qu'un transistor à effet de champ à grille ou MOSFET (de anglais « *Metal Oxide Semiconductor Field Effect Transistor*») ou bien un transistor bipolaire à grille isolée ou IGBT (de l'anglais « *Insulated Gate Bipolar Transistor* »), présentant une diode (non représentés) en montage antiparallèle. Chaque interrupteur est destiné à prendre sélectivement un état ouvert et un état fermé. Ainsi, pour chaque extrémité de phase, l'interrupteur de côté haut est destiné à sélectivement connecter/déconnecter l'extrémité de phase considérée à/de la première borne 114, et donc à/de la borne positive + de la batterie 102. De même, l'interrupteur de côté bas est destiné à sélectivement connecter/déconnecter l'extrémité de phase considérée à/de la borne de côté bas 116, et donc à/de la borne négative - de la batterie 102. L'onduleur 112 est donc conçu pour appliquer sur chaque extrémité de phase l'un parmi les deux potentiels prédéterminés +E et 0, en fonction des états des deux interrupteurs associés à extrémité de phase considérée.

Ainsi, l'onduleur 112 est conçu pour appliquer sur chaque phase 106, 108, 110, l'une parmi les trois tensions de phase prédéterminées +E, 0 et -E, en fonction des états des quatre interrupteurs associés aux deux extrémités de phase de la phase 106, 108, 110 considérée. Plus précisément, la tension +E est obtenue avec le potentiel +E sur la première extrémité et le potentiel 0 sur la deuxième extrémité. La tension 0 est, obtenue avec le potentiel +E sur les deux extrémités ou bien avec le potentiel 0 sur les deux extrémités. La tension -E est obtenue avec le potentiel 0 sur la première extrémité et le potentiel +E sur la deuxième extrémité.

Chaque combinaison d'états des interrupteurs définit un état de l'onduleur 112 dans lequel il applique, sur chaque phase 106, 108, 110 du moteur électrique 104, une tension de phase prédéterminée valant +E, 0 ou -E. Il sera apprécié que les états de l'onduleurs 112 sont des états discrets.

Dans la suite de la description, toutes les tensions de phase prédéterminées seront exprimées de manière normalisée. Ainsi, chaque tension de phase prédéterminée vaut +1, 0 ou -1.

Il sera apprécié que plusieurs états de l'onduleur 112 peuvent être associés à des mêmes tensions de phase prédéterminées.

En outre, dans chaque combinaison d'états des interrupteurs, l'interrupteur de côté haut et l'interrupteur de côté bas de chaque bras de commutation sont dans des états opposés.

En référence à la figure 2, il est possible d'associer, dans l'espace vectoriel Esp des tensions de phase U, V, W, un vecteur prédéterminé M1...M27 aux tensions de phase prédéterminées de chaque état de l'onduleur 112. Ces tensions de phase prédéterminées forment les coordonnées du vecteur M1...M27. Les vecteurs prédéterminés M1...M27 forment un maillage cubique régulier dans l'espace vectoriel Esp.

De retour à la figure 1, l'installation électrique 100 comporte en outre un dispositif de commande 118 de l'onduleur 112.

Le dispositif de commande 118 comporte tout d'abord une mémoire 120.

Des groupes T1...T48 de quatre vecteurs prédéterminés M1...M27 sont enregistrés dans la mémoire 120. Ces groupes T1...T48 sont indiqués dans le Tableau 1 suivant, dans lequel les indices des vecteurs prédéterminés M1...M27 sont indiqués entre crochets :

**Tableau 1**

| |
|---|
| T1 = [14 15 18 24] |
| T2 = [14 18 27 24] |
| T3 = [14 23 24 26] |
| T4 = [14 24 27 26] |
| T5 = [14 17 26 18] |
| T6 = [14 26 27 18] |
| |
| T7 = [14 15 12 21] |
| T8 = [14 15 24 21] |
| T9 = [14 11 12 20] |
| T10 = [14 12 21 20] |
| T11 = [14 23 20 21] |
| T12 = [14 23 24 21] |
| |
| T13 = [14 15 12 6] |
| T14 = [14 12 3 6] |
| T15 = [14 5 6 3] |
| T16 = [14 5 2 3] |
| T17 = [14 11 2 3] |
| T18 = [14 11 12 3] |
| |
| T19 = [14 15 18 9] |
| T20 = [14 15 6 9] |
| T21 = [14 17 18 9] |
| T22 = [14 17 8 9] |
| T23 = [14 8 9 6] |
| T24 = [14 5 6 8] |
| |
| T25 = [14 13 16 22] |
| T26 = [14 22 25 16] |
| T27 = [14 23 22 25] |
| T28 = [14 23 26 25] |
| T29 = [14 17 26 25] |
| T30 = [14 17 16 25] |
| |
| T31 = [14 13 10 19] |
| T32 = [14 13 22 19] |
| T33 = [14 11 10 19] |
| T34 = [14 11 20 19] |
| T35 = [14 20 19 22] |
| T36 = [14 23 20 22] |
| |
| T37 = [14 13 4 10] |
| T38 = [14 4 1 10] |
| T39 = [14 5 2 4] |
| T40 = [14 2 1 4] |
| T41 = [14 2 1 10] |
| T42 = [14 10 11 2] |
| |
| T43 = [14 13 16 7] |
| T44 = [14 13 4 7] |
| T45 = [14 17 8 16] |
| T46 = [14 8 7 16] |
| T47 = [14 5 8 7] |
| T48 = [14 5 4 7] |

Il sera apprécié que chaque groupe T1...T48 comporte le vecteur d'origine M14 = (0, 0, 0) formé par des tensions de phase prédéterminés toutes nulles. En outre, les vecteurs prédéterminés M1...M27 de chaque groupe T1...T48 définissent un volume (plus précisément, un tétraèdre) dans l'espace vectoriel Esp. Les volumes ainsi définis ne se chevauchent pas, au mieux se touchent-ils par une arrête commune ou bien par une face commune.

Il sera également apprécié que chacun des groupes T9, T10, T13, T14, T23, T24, T25, T26, T35, T36, T45 et T46 comporte exactement trois vecteurs prédéterminés, dont le vecteur d'origine M14, pour chacun desquels la somme des tensions de phase prédéterminées est nulle. Il s'agit donc de tensions de phase non-homopolaires. Les vecteurs prédéterminés correspondants, indiqués en gras dans le Tableau 1, seront appelés par la suite « vecteurs non-homopolaires ». Chacun de ces groupes T9, T10, T13, T14, T23, T24, T25, T26, T35, T36, T45 et T46 comporte en outre exactement un vecteur pour lequel la somme des tensions de phase prédéterminées est non nulle. Il s'agit donc de tensions de phase homopolaires. Les vecteurs prédéterminés correspondants seront appelés par la suite « vecteurs homopolaires ».

Il sera également apprécié que chacun des groupes T7, T11, T15, T18, T20, T22, T26, T30, T32, T34, T43, T47 comporte exactement deux vecteurs non-homopolaires, dont le vecteur d'origine M14, et exactement deux vecteurs homopolaires .

Les autres groupes T1, T2, T3, T4, T5, T6, T8, T12, T16, T17, T19, T21, T28, T29, T31, T33, T37, T38, T39, T40, T41, T42, T44, T48 comportent, en plus du vecteur d'origine M14 qui est non homopolaire, exactement trois vecteurs homopolaires.

Chaque vecteur prédéterminé M1...M27 est en outre associé, dans la mémoire 120, au(x) état(s) de l'onduleur 112 associés à ce vecteur prédéterminé M1...M27. Chaque état de l'onduleur 112 est par exemple représenté par les états des interrupteurs de côté haut et des interrupteurs de côté bas. Ainsi, les associations enregistrées dans la mémoire 112 sont par exemple celles données par le Tableau 2 suivant, dans lequel les colonnes indiquent les états des interrupteurs de côté haut et de côté bas des bras de commutation 106A, 106B, 108A, 108B, 110A, 110B, dans lequel «0» représente l'état ouvert et « 1 » représente l'état fermé, et dans lequel la colonne « ID » indique le numéro de l'état :

**Tableau 2**

| | 106A | | 106B | | 108A | | 108B | | 110A | | 110B | | |
|---|---|---|---|---|---|---|---|---|---|---|---|---|---|
| | Haut | Bas | Haut | Bas | Haut | Bas | Haut | Bas | Haut | Bas | Haut | Bas | ID |
| M1 | 0 | 1 | 1 | 0 | 0 | 1 | 1 | 0 | 0 | 1 | 1 | 0 | 1 |
| M2 | 0 | 1 | 1 | 0 | 0 | 1 | 1 | 0 | 0 | 1 | 0 | 1 | 2 |
| - | 0 | 1 | 1 | 0 | 0 | 1 | 1 | 0 | 1 | 0 | 1 | 0 | 3 |
| M3 | 0 | 1 | 1 | 0 | 0 | 1 | 1 | 0 | 1 | 0 | 0 | 1 | 4 |
| M4 | 0 | 1 | 1 | 0 | 0 | 1 | 0 | 1 | 0 | 1 | 1 | 0 | 5 |
| - | 0 | 1 | 1 | 0 | 1 | 0 | 1 | 0 | 0 | 1 | 1 | 0 | 6 |
| M5 | 0 | 1 | 1 | 0 | 0 | 1 | 0 | 1 | 0 | 1 | 0 | 1 | 7 |
| - | 0 | 1 | 1 | 0 | 0 | 1 | 0 | 1 | 1 | 0 | 1 | 0 | 8 |
| - | 0 | 1 | 1 | 0 | 1 | 0 | 1 | 0 | 0 | 1 | 0 | 1 | 9 |
| - | 0 | 1 | 1 | 0 | 1 | 0 | 1 | 0 | 1 | 0 | 1 | 0 | 10 |
| M6 | 0 | 1 | 1 | 0 | 0 | 1 | 0 | 1 | 1 | 0 | 0 | 1 | 11 |
| - | 0 | 1 | 1 | 0 | 1 | 0 | 1 | 0 | 1 | 0 | 0 | 1 | 12 |
| M7 | 0 | 1 | 1 | 0 | 1 | 0 | 0 | 1 | 0 | 1 | 1 | 0 | 13 |
| M8 | 0 | 1 | 1 | 0 | 1 | 0 | 0 | 1 | 0 | 1 | 0 | 1 | 14 |
| - | 0 | 1 | 1 | 0 | 1 | 0 | 0 | 1 | 1 | 0 | 1 | 0 | 15 |
| M9 | 0 | 1 | 1 | 0 | 1 | 0 | 0 | 1 | 1 | 0 | 0 | 1 | 16 |
| M10 | 0 | 1 | 0 | 1 | 0 | 1 | 1 | 0 | 0 | 1 | 1 | 0 | 17 |
| - | 1 | 0 | 1 | 0 | 0 | 1 | 1 | 0 | 0 | 1 | 1 | 0 | 18 |
| M11 | 0 | 1 | 0 | 1 | 0 | 1 | 1 | 0 | 0 | 1 | 0 | 1 | 19 |
| - | 0 | 1 | 0 | 1 | 0 | 1 | 1 | 0 | 1 | 0 | 1 | 0 | 20 |
| - | 1 | 0 | 1 | 0 | 0 | 1 | 1 | 0 | 0 | 1 | 0 | 1 | 21 |
| - | 1 | 0 | 1 | 0 | 0 | 1 | 1 | 0 | 1 | 0 | 1 | 0 | 22 |
| M12 | 0 | 1 | 0 | 1 | 0 | 1 | 1 | 0 | 1 | 0 | 0 | 1 | 23 |
| - | 1 | 0 | 1 | 0 | 0 | 1 | 1 | 0 | 1 | 0 | 0 | 1 | 24 |
| M13 | 0 | 1 | 0 | 1 | 0 | 1 | 0 | 1 | 0 | 1 | 1 | 0 | 25 |
| - | 0 | 1 | 0 | 1 | 1 | 0 | 1 | 0 | 0 | 1 | 1 | 0 | 26 |
| - | 1 | 0 | 1 | 0 | 0 | 1 | 0 | 1 | 0 | 1 | 1 | 0 | 27 |
| - | 1 | 0 | 1 | 0 | 1 | 0 | 1 | 0 | 0 | 1 | 1 | 0 | 28 |
| M14 | 0 | 1 | 0 | 1 | 0 | 1 | 0 | 1 | 0 | 1 | 0 | 1 | 29 |
| - | 0 | 1 | 0 | 1 | 0 | 1 | 0 | 1 | 1 | 0 | 1 | 0 | 30 |
| - | 0 | 1 | 0 | 1 | 1 | 0 | 1 | 0 | 0 | 1 | 0 | 1 | 31 |
| - | 0 | 1 | 0 | 1 | 1 | 0 | 1 | 0 | 1 | 0 | 1 | 0 | 32 |
| - | 1 | 0 | 1 | 0 | 0 | 1 | 0 | 1 | 0 | 1 | 0 | 1 | 33 |
| - | 1 | 0 | 1 | 0 | 0 | 1 | 0 | 1 | 1 | 0 | 1 | 0 | 34 |
| - | 1 | 0 | 1 | 0 | 1 | 0 | 1 | 0 | 0 | 1 | 0 | 1 | 35 |
| - | 1 | 0 | 1 | 0 | 1 | 0 | 1 | 0 | 1 | 0 | 1 | 0 | 36 |
| M15 | 0 | 1 | 0 | 1 | 0 | 1 | 0 | 1 | 1 | 0 | 0 | 1 | 37 |
| - | 0 | 1 | 0 | 1 | 1 | 0 | 1 | 0 | 1 | 0 | 0 | 1 | 38 |
| - | 1 | 0 | 1 | 0 | 0 | 1 | 0 | 1 | 1 | 0 | 0 | 1 | 39 |
| - | 1 | 0 | 1 | 0 | 1 | 0 | 1 | 0 | 1 | 0 | 0 | 1 | 40 |
| M16 | 0 | 1 | 0 | 1 | 1 | 0 | 0 | 1 | 0 | 1 | 1 | 0 | 41 |
| - | 1 | 0 | 1 | 0 | 1 | 0 | 0 | 1 | 0 | 1 | 1 | 0 | 42 |
| M17 | 0 | 1 | 0 | 1 | 1 | 0 | 0 | 1 | 0 | 1 | 0 | 1 | 43 |
| - | 0 | 1 | 0 | 1 | 1 | 0 | 0 | 1 | 1 | 0 | 1 | 0 | 44 |
| - | 1 | 0 | 1 | 0 | 1 | 0 | 0 | 1 | 0 | 1 | 0 | 1 | 45 |
| - | 1 | 0 | 1 | 0 | 1 | 0 | 0 | 1 | 1 | 0 | 1 | 0 | 46 |
| M18 | 0 | 1 | 0 | 1 | 1 | 0 | 0 | 1 | 1 | 0 | 0 | 1 | 47 |
| - | 1 | 0 | 1 | 0 | 1 | 0 | 0 | 1 | 1 | 0 | 0 | 1 | 48 |
| M19 | 1 | 0 | 0 | 1 | 0 | 1 | 1 | 0 | 0 | 1 | 1 | 0 | 49 |
| M20 | 1 | 0 | 0 | 1 | 0 | 1 | 1 | 0 | 0 | 1 | 0 | 1 | 50 |
| - | 1 | 0 | 0 | 1 | 0 | 1 | 1 | 0 | 1 | 0 | 1 | 0 | 51 |
| M21 | 1 | 0 | 0 | 1 | 0 | 1 | 1 | 0 | 1 | 0 | 0 | 1 | 52 |
| M22 | 1 | 0 | 0 | 1 | 0 | 1 | 0 | 1 | 0 | 1 | 1 | 0 | 53 |
| - | 1 | 0 | 0 | 1 | 1 | 0 | 1 | 0 | 0 | 1 | 1 | 0 | 54 |
| M23 | 1 | 0 | 0 | 1 | 0 | 1 | 0 | 1 | 0 | 1 | 0 | 1 | 55 |
| - | 1 | 0 | 0 | 1 | 0 | 1 | 0 | 1 | 1 | 0 | 1 | 0 | 56 |
| - | 1 | 0 | 0 | 1 | 1 | 0 | 1 | 0 | 0 | 1 | 0 | 1 | 57 |
| - | 1 | 0 | 0 | 1 | 1 | 0 | 1 | 0 | 1 | 0 | 1 | 0 | 58 |
| M24 | 1 | 0 | 0 | 1 | 0 | 1 | 0 | 1 | 1 | 0 | 0 | 1 | 59 |
| - | 1 | 0 | 0 | 1 | 1 | 0 | 1 | 0 | 1 | 0 | 0 | 1 | 60 |
| M25 | 1 | 0 | 0 | 1 | 1 | 0 | 0 | 1 | 0 | 1 | 1 | 0 | 61 |
| M26 | 1 | 0 | 0 | 1 | 1 | 0 | 0 | 1 | 0 | 1 | 0 | 1 | 62 |
| - | 1 | 0 | 0 | 1 | 1 | 0 | 0 | 1 | 1 | 0 | 1 | 0 | 63 |
| M27 | 1 | 0 | 0 | 1 | 1 | 0 | 0 | 1 | 1 | 0 | 0 | 1 | 64 |

Ainsi, les groupes de vecteurs prédéterminés T1...T48 et les associations entre les vecteurs prédéterminés M1...M27 et les états de l'onduleur 112 forment, pris ensemble, des groupes de quatre états de l'onduleur 112 associés chacun à quatre vecteurs prédéterminés M1...M27. En particulier, certains groupes d'états de l'onduleur 112 comportent des états de l'onduleur 112 associés à respectivement quatre vecteurs prédéterminés M1...M27 dont trois sont non-homopolaires et dont un est homopolaire. Il s'agit des groupes d'états de l'onduleur 112 correspondant aux groupes de vecteurs prédéterminés T9, T10, T13, T14, T23, T24, T25, T26, T35, T36, T45 et T46.

Le dispositif de commande 118 comporte en outre une unité de traitement 122 conçue pour réaliser les actions qui seront décrites plus loin, lors de la description d'un procédé de fonctionnement de l'installation électrique 100. Dans l'exemple décrit, l'unité de traitement 122 est un ordinateur destiné à exécuter un programme d'ordinateur pour réaliser ces actions. Alternativement, l'unité de traitement 122 pourrait être un composant matériel ne faisant pas intervenir de programme d'ordinateur.

Par ailleurs, par « combinaison d'états des interrupteurs », il faut comprendre une combinaison stable, par opposition aux combinaisons transitoires résultant de légers décalages, parfois souhaités, entre l'ouverture et la fermeture des interrupteurs pour passer d'une combinaison stable à une autre. En particulier, le dispositif de commande 120 est configuré pour ouvrir un interrupteur d'un bras de commutation légèrement avant la fermeture de l'autre interrupteur de ce bras de commutation. Ainsi, pendant un court instant transitoire, appelé un temps mort, les deux interrupteurs d'un même bras de commutation sont ouverts en même temps. Cela permet d'éviter que les deux interrupteurs soient fermés en même temps et donc que la batterie 102 soit mise en court-circuit. Ainsi, dans le cadre de la présente invention, les combinaisons stables d'interrupteurs peuvent être séparées les unes des autres par des temps morts durant lesquels les deux interrupteurs d'un même bras sont ouverts. Généralement, lorsque la fréquence de découpage est autour de 10 kHz, les combinaisons stables des interrupteurs sont maintenues pendant au moins 2-3 µs, par exemple au moins 10 µs, tandis que les combinaisons transitoires durent moins de 2-3 µs.

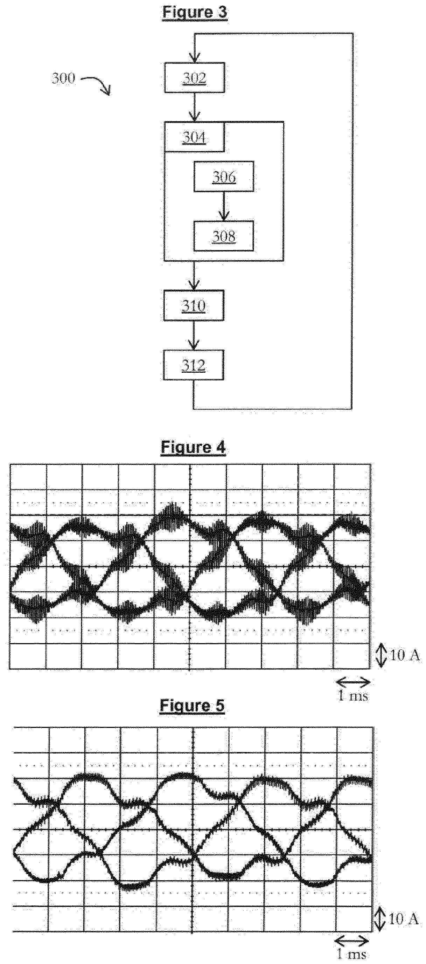

En référence à la figure 3, un procédé 300 de fonctionnement de l'installation électrique 100 va à présent être décrit.

Au cours d'une étape 302, l'unité de traitement 122 reçoit des consignes de tension de phase U*, V*, W* pour un intervalle de temps de fonctionnement du moteur 104. L'intervalle de temps correspond par exemple à un secteur d'angle prédéterminé de rotation du rotor du moteur 104. Les consignes de tension de phase U*, V*, W* forment un vecteur de consigne M* dans l'espace vectoriel Esp des tensions de phase U, V, W. Par exemple, le dispositif de commande 118 reçoit les consignes de tension de phase U* = 1/2, V* = -1 et W* = 1/2 formant le vecteur de consigne M* = (1/2, -1, 1/2).

Au cours d'une étape 304, l'unité de traitement 122 sélectionne quatre états de l'onduleur 112 associés respectivement à quatre vecteurs prédéterminés M1...M27 définissant un volume dans l'espace vectoriel Esp contenant le vecteur de consigne M*.

Dans l'exemple décrit, l'étape 304 comporte une étape 306 au cours de laquelle l'unité de traitement 122 sélectionne, dans la mémoire 120, le groupe T1...T48 de vecteurs prédéterminés dont les vecteurs prédéterminés forment un volume contenant le vecteur de consigne M*. Par exemple, pour le vecteur de consigne M* = (1/2, -1, t/2), l'unité de traitement 122 sélectionne le groupe T9 de vecteurs prédéterminés comportant les vecteurs prédéterminés M14, M11, M12 et M20. Dans cet exemple, le vecteur de consigne M* est situé sur la face définie par les vecteurs prédéterminés M14, M12 et M20 et plus précisément sur le segment défini par les vecteurs prédéterminés M12 et M20. Il sera apprécié que l'unité de traitement 122 aurait pu sélectionner le groupe T10 de vecteur prédéterminés comportant les vecteurs prédéterminés M14, M12, M21 et M20.

Dans l'exemple décrit, l'étape 304 comporte en outre une étape 308 au cours de laquelle l'unité de traitement 122 sélectionne pour chaque vecteur prédéterminé du groupe de vecteurs prédéterminés sélectionné, un état de l'onduleur 112 associé à ce vecteur prédéterminé dans la mémoire 120. De préférence, pour chaque vecteur prédéterminé M1...M27, l'état sélectionné n'est pas toujours le même. Il change par exemple à chaque multiple prédéterminé (le multiple pouvant être une fraction) de tour du rotor du moteur 104. L'état sélectionné pour un même vecteur prédéterminé M1...M27 change par exemple tous les tours ou bien tous les deux tours du moteur ou bien encore tous les demi-tours du rotor du moteur 104.

Au cours d'une étape 310, l'unité de traitement 122 détermine des rapports cycliques pour chacun des vecteurs prédéterminés du groupe de vecteurs prédéterminés sélectionné. Les rapports cycliques sont déterminés de sorte que le barycentre des vecteurs prédéterminés, pondérés suivant ces rapports cycliques, donne sensiblement le vecteur de consigne M*. Dans l'exemple du vecteur de consigne M* = (1/2, -1, 1/2), l'unité de traitement 122 attribue un rapport cyclique de 50% à chacun des vecteurs prédéterminés M12 et M20, et un rapport cyclique de 0% à chacun des vecteurs prédéterminés M14 et M11. En effet: M* = (1/2, -1, 1/2) = 50% × M12 + 50% × M20 = 50% × (1, -1, 0) + 50% × (0, -1, 1).

Au cours d'une étape 312, l'unité de traitement 122 commande l'onduleur 112, sur l'intervalle de temps, pour placer l'onduleur 112 successivement, selon les rapports cycliques déterminés, dans les états sélectionnés, afin que l'onduleur applique sensiblement, en moyenne sur l'intervalle de temps, les consignes de tension de phase U*, V*, W* sur respectivement les phases 106, 108, 110 du moteur 104. Pour obtenir l'état souhaité de l'onduleur 112, l'unité de traitement 122 place les interrupteurs dans les états correspondants. Il sera apprécié que l'onduleur 112 peut être commandé pour prendre plusieurs fois les états sélectionnés. Dans l'exemple du vecteur de consigne M* = (1/2, -1,1/2), l'unité de traitement 122 peut placer l'onduleur 112 dans l'état donnant le vecteur prédéterminé M12 pendant 25% de l'intervalle de temps, puis dans l'état donnant le vecteur prédéterminé M20 pendant 25% de l'intervalle de temps, puis à nouveau dans l'état donnant le vecteur prédéterminé M12 pendant 25% de l'intervalle de temps prédéterminé, puis à nouveau dans l'état donnant le vecteur prédéterminé M20 pendant 25% de l'intervalle de temps. Il sera en outre apprécié que l'unité de traitement 112 fait de préférence se succéder les états de l'onduleur 112 sélectionnés selon une séquence optimale, dans laquelle le passage d'un état au suivant n'entraîne qu'un minium de commutations des interrupteurs.

Le procédé retourne alors à l'étape 302 pour l'intervalle de temps suivant.

La figure 4 est un chronogramme de courants de phase dans un moteur électrique alimenté par un onduleur commandé suivant la méthode de l'état de la technique MLI intersective 3 niveaux.

La figure 5 est un chronogramme des courants de phase dans un moteur électrique alimenté par un onduleur commandé suivant un dispositif de commande selon l'invention. Comme cela est visible en comparant les figures 4 et 5, l'invention permet de réduire les pics de courant intempestifs, provenant de l'utilisation dans la méthode de l'état de la technique de composantes homopolaires parasites de tension.

La présente invention n'est pas limitée au mode de réalisation décrit précédemment, mais est au contraire définie par les revendications qui suivent. Il sera en effet apparent à l'homme du métier que des modifications peuvent y être apportées.

En particulier, l'invention peut facilement s'adapter à un onduleur pour un moteur à N phases. Dans ce cas, l'espace Esp des phases du moteur est de dimension N. Dans un tel espace, le volume est défini par N+1 vecteurs.

En outre, les groupes d'états de l'onduleur pourraient comporter plus de N+1 états. Dans ce cas, ces états seraient associés à des vecteurs prédéterminés définissant un volume autre qu'un tétraèdre.

En outre, la batterie 102 pourrait être remplacée par une autre source de tension continue.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

## Revendications

1. Dispositif de commande (118) d'un onduleur (112) destiné à être connecté à un moteur (104) présentant N phases (106, 108, 110) destinées à se voir respectivement appliquer N tensions de phase (U, V, W), les N tensions de phase (U, V, W) définissant un espace vectoriel (Esp) dont chaque tension de phase (U, V, W) forme une dimension, N étant supérieur ou égal à trois, l'onduleur (112) étant conçu pour prendre plusieurs états dans chacun desquels il est conçu pour appliquer des tensions de phase prédéterminées sur les phases (106, 108, 110) du moteur (104), les tensions de phase prédéterminées de chaque état de l'onduleur (112) formant un vecteur prédéterminé (M1...M27) dans l'espace vectoriel (Esp), le dispositif de commande (118) comportant :
- une unité pour recevoir, pour un intervalle de temps, des consignes de tension de phase formant un vecteur de consigne dans l'espace vectoriel (Esp),
- une unité pour sélectionner au moins N+1 états de l'onduleur (112) associés à respectivement au moins N+1 vecteurs prédéterminés (M1...M27) définissant un volume dans l'espace vectoriel (Esp) contenant le vecteur de consigne,
- une unité pour commander l'onduleur (112), sur l'intervalle de temps, pour le placer successivement dans les états sélectionnés, afin qu'il applique sensiblement, en moyenne sur l'intervalle de temps, les consignes de tension de phase,
le dispositif de commande (118) étant tel que la sélection des au moins N+1 états de l'onduleur (112) est réalisée parmi des groupes d'au moins N+1 états de l'onduleur (112), les au moins N+1 états de l'onduleur (112) d'au moins un des groupes étant associés à respectivement au moins N+1 vecteurs prédéterminés (M1...M27) dont au moins N sont formés par des tensions de phase prédéterminées de somme nulle et dont au moins un est formé par des tensions de phase prédéterminées de somme non nulle.

2. Dispositif de commande (118) selon la revendication 1, dans lequel chaque groupe comporte un état de l'onduleur (112) associé au vecteur nul (M14) de l'espace vectoriel (Esp) pour lequel les tensions de phase prédéterminées sont toutes nulles.

3. Dispositif de commande (118) selon la revendication 1 ou 2, dans lequel les volumes définis par les vecteurs prédéterminés (M1...M27) associés aux états de l'onduleur (112) des groupes ne se chevauchent pas.

4. Dispositif de commande (118) selon l'une quelconque des revendications 1 à 3, dans lequel chaque groupe d'états de l'onduleur (112) comporte exactement N+1 états de l'onduleur (112).

5. Dispositif de commande (118) selon l'une quelconque des revendications 1 à 4, dans lequel au moins un groupe d'états de l'onduleur (112) comporte exactement N-1 états associés respectivement à N-1 vecteurs prédéterminés (M1...M27) formés chacun par des tensions de phase prédéterminées dont la somme est nulle.

6. Dispositif de commande (118) selon l'une quelconque des revendications 1 à 5, dans lequel N est égal à trois.

7. Installation électrique (100) comportant :
- un onduleur (112) destiné à être connecté à un moteur (104) présentant N phases (106, 108, 110) destinées à se voir respectivement appliquer N tensions de phase (U, V, W), les N tensions de phase (U, V, W) définissant un espace vectoriel (Esp) dont chaque tension de phase (U, V, W) forme une dimension, N étant supérieur ou égal à trois, l'onduleur (112) étant conçu pour prendre plusieurs états dans chacun desquels il est conçu pour appliquer des tensions de phase prédéterminées sur les phases (106, 108, 110) du moteur (104), les tensions de phase prédéterminées de chaque état de l'onduleur (112) formant un vecteur prédéterminé (M1...M27) dans l'espace vectoriel (Esp),
- un dispositif de commande (118) de l'onduleur (112), selon l'une quelconque des revendications 1 à 6.

8. Instillation électrique (100) selon la revendication 7, dans lequel l'onduleur (112) comporte :
- une première borne (114) et une deuxième borne (116) entre lesquelles une tension continue (E) est destinée à être appliquée,
- pour chaque extrémité de phase, un bras de commutation (106A, 106B, 108A, 108B, 110A, 110B) comportant deux interrupteurs connectés l'un à l'autre en un point milieu (UA, UB, VA, VB, WA, WB) auquel l'extrémité de phase considérée est destinée à être connectée, un premier interrupteur étant connecté à la première borne (114), le deuxième interrupteur étant connecté à la deuxième borne (116),
chaque interrupteur étant conçu pour prendre un état ouvert et un état fermé, chaque état de l'onduleur (112) étant défini par une combinaison d'états des interrupteurs.

9. Procédé de commande (300) d'un onduleur (112) destiné à être connecté à un moteur (104) présentant N phases (106, 108, 110), destinées à se voir respectivement appliquer N tensions de phase (U, V, W), les N tensions de phase (U, V, W) définissant un espace vectoriel (Esp) dont chaque tension de phase (U, V, W) forme une dimension, N étant supérieur ou égal à trois, l'onduleur (112) étant conçu pour prendre plusieurs états dans chacun desquels il est conçu pour appliquer des tensions de phase prédéterminées sur les phases (106, 108, 110) du moteur (104), les tensions de phase prédéterminées de chaque état de l'onduleur (112) formant un vecteur prédéterminé (M1 ...M27) dans l'espace vectoriel (Esp), le procédé de commande (300) comportant :
- recevoir, pour un intervalle de temps, des consignes de tension de phase formant un vecteur de consigne dans l'espace vectoriel (Esp),
- sélectionner au moins N+1 états de l'onduleur (112) associés à respectivement au moins N+1 vecteurs prédéterminés (M1...M27) définissant un volume dans l'espace vectoriel (Esp) contenant le vecteur de consigne,
- commander l'onduleur (112), sur l'intervalle de temps, pour le placer successivement dans les états sélectionnés, afin qu'il applique sensiblement, en moyenne sur l'intervalle de temps, les consignes de tension de phase,
le procédé de commande (300) étant tel la sélection des au moins N+1 états de l'onduleur (112) est réalisée parmi des groupes d'au moins N+1 états de l'onduleur (112), les au moins N+1 états de l'onduleur (112) d'au moins un des groupes étant associés à respectivement au moins N+1 vecteurs prédéterminés (M1...M27) dont au moins N sont formés par des tensions de phase prédéterminées de somme nulle et dont au moins un est formé par des tensions de phase prédéterminées de somme non nulle.

10. programme d'ordinateur comprenant des instructions qui conduisent l'installation électrique selon la revendication 7 à exécuter les étapes de la méthode selon la revendication 9.

## Patentansprüche

1. Vorrichtung zur Steuerung (118) eines Wechselrichters (112), der bestimmt ist, an einen Motor (104) angeschlossen zu sein, der N Phasen (106, 108, 110) aufweist, die bestimmt sind, jeweils N Phasenspannungen (U, V, W) anzulegen, wobei die N Phasenspannungen (U, V, W) einen Vektorraum (Esp) definieren, von dem jede Phasenspannung (U, V, W) eine Dimension bildet, wobei N größer oder gleich drei ist, wobei der Wechselrichter (112) eingerichtet ist, um mehrere Zustände anzunehmen, wobei er in jedem derselben eingerichtet ist, um vorher festgelegte Phasenspannungen auf die Phasen (106, 108, 110) des Motors (104) anzulegen, wobei die vorher festgelegten Phasenspannungen jedes Zustands des Wechselrichters (112) einen vorher festgelegten Vektor (M1...M27) im Vektorraum (Esp) bilden, wobei die Steuerungsvorrichtung (118) aufweist:
- eine Einheit, um für ein Zeitintervall Phasenspannungssollwerte zu empfangen, die einen Sollvektor im Vektorraum (Esp) bilden,
- eine Einheit, um mindestens N+1 Zustände des Wechselrichters (112) auszuwählen, die jeweils mindestens N+1 vorher festgelegten Vektoren (M1...M27) zugeordnet sind, die ein Volumen im Vektorraum (Esp) definieren, das den Sollvektor enthält,
- eine Einheit, um den Wechselrichter (112) über das Zeitintervall zu steuern, um ihn nacheinander in die ausgewählten Zustände zu versetzen, damit er im Wesentlichen im Mittel über das Zeitintervall die Phasenspannungssollwerte anlegt,
wobei die Steuerungsvorrichtung (118) derart ist, dass die Auswahl der mindestens N+1 Zustände des Wechselrichters (112) aus Gruppen von mindestens N+1 Zuständen des Wechselrichters (112) durchgeführt wird, wobei die mindestens N+1 Zustände des Wechselrichters (112) aus mindestens einer der Gruppen jeweils mindestens N+1 vorher festgelegten Vektoren (M1...M27) zugeordnet sind, von denen mindestens N von vorher festgelegen Phasenspannungen mit der Summe Null gebildet sind und von denen mindestens einer von vorher festgelegten Phasenspannungen mit der Summe ungleich Null gebildet ist.

2. Steuerungsvorrichtung (118) nach Anspruch 1, wobei jede Gruppe einen Zustand des Wechselrichters (112) aufweist, der dem Vektor Null (M14) des Vektorraums (Esp) zugeordnet ist, für den die vorher festgelegten Phasenspannungen alle Null sind.

3. Steuerungsvorrichtung (118) nach Anspruch 1 oder 2, wobei sich die von den vorher festgelegten Vektoren (M1...M27) definierten Volumen, die den Zuständen des Wechselrichters (112) der Gruppen zugeordnet sind, nicht überschneiden.

4. Steuerungsvorrichtung (118) nach einem der Ansprüche 1 bis 3, wobei jede Gruppe von Zuständen des Wechselrichters (112) genau N+1 Zustände des Wechselrichters (112) aufweist.

5. Steuerungsvorrichtung (118) nach einem der Ansprüche 1 bis 4, wobei mindestens eine Gruppe von Zuständen des Wechselrichters (112) genau N-1 Zustände aufweist, die jeweils N-1 vorher festgelegten Vektoren (M1...M27) zugeordnet sind, die jeweils von vorher festgelegten Phasenspannungen gebildet sind, deren Summe Null ist.

6. Steuerungsvorrichtung (118) nach einem der Ansprüche 1 bis 5, wobei N gleich drei ist.

7. Elektrische Anlage (100), aufweisend:
- einen Wechselrichter (112), der bestimmt ist, an einen Motor (104) angeschlossen zu sein, der N Phasen (106, 108, 110) aufweist, die bestimmt sind, jeweils N Phasenspannungen (U, V, W) anzulegen, wobei die N Phasenspannungen (U, V, W) einen Vektorraum (Esp) definieren, von dem jede Phasenspannung (U, V, W) eine Dimension bildet, wobei N größer oder gleich drei ist, wobei der Wechselrichter (112) eingerichtet ist, um mehrere Zustände anzunehmen, wobei er in jedem derselben eingerichtet ist, um vorher festgelegte Phasenspannungen auf die Phasen (106, 108, 110) des Motors (104) anzulegen, wobei die vorher festgelegten Phasenspannungen jedes Zustands des Wechselrichters (112) einen vorher festgelegten Vektor (M1...M27) im Vektorraum (Esp) bilden
- eine Steuerungsvorrichtung (118) des Wechselrichters (112) nach einem der Ansprüche 1 bis 6.

8. Elektrische Anlage (100) nach Anspruch 7, wobei der Wechselrichter (112) aufweist:
- eine erste Klemme (114) und eine zweite Klemme (116), zwischen denen eine Gleichspannung (E) bestimmt ist, angelegt zu sein,
- für jedes Phasenende einen Umschaltarm (106A, 106B, 108A, 108B, 110A, 110B), aufweisend zwei Schalter, die aneinander in einem Mittelpunkt (UA, UB, VA, VB, WA, WB) angeschlossen sind, an den das entsprechende Phasenende bestimmt ist, angeschlossen zu sein, wobei ein erster Schalter an die erste Klemme (114) angeschlossen ist, wobei der zweite Schalter an die zweite Klemme (116) angeschlossen ist,
wobei jeder Schalter eingerichtet ist, einen offenen Zustand und einen geschlossenen Zustand anzunehmen, wobei jeder Zustand des Wechselrichters (112) von einer Kombination von Zuständen der Schalter definiert ist.

9. Verfahren zur Steuerung (300) eines Wechselrichters (112), der bestimmt ist, an einen Motor (104) angeschlossen zu sein, der N Phasen (106, 108, 110) aufweist, die bestimmt sind, jeweils N Phasenspannungen (U, V, W) anzulegen, wobei die N Phasenspannungen (U, V, W) einen Vektorraum (Esp) definieren, von dem jede Phasenspannung (U, V, W) eine Dimension bildet, wobei N größer oder gleich drei ist, wobei der Wechselrichter (112) eingerichtet ist, um mehrere Zustände anzunehmen, wobei er in jedem derselben eingerichtet ist, um vorher festgelegte Phasenspannungen auf die Phasen (106, 108, 110) des Motors (104) anzulegen, wobei die vorher festgelegten Phasenspannungen jedes Zustands des Wechselrichters (112) einen vorher festgelegten Vektor (M1...M27) im Vektorraum (Esp) bilden, wobei das Steuerungsverfahren (300) aufweist:
- Empfangen, für ein Zeitintervall, Phasenspannungssollwerte, die einen Sollvektor im Vektorraum (Esp) bilden,
- Auswählen von mindestens N+1 Zuständen des Wechselrichters (112), die jeweils mindestens N+1 vorher festgelegten Vektoren (M1...M27) zugeordnet sind, die ein Volumen im Vektorraum (Esp) definieren, das den Sollvektor enthält,
- Steuern des Wechselrichters (112) über das Zeitintervall, um ihn nacheinander in die ausgewählten Zustände zu versetzen, damit er im Wesentlichen im Mittel über das Zeitintervall die Phasenspannungssollwerte anlegt,
wobei das Steuerungsverfahren (300) derart ist, dass die Auswahl der mindestens N+1 Zustände des Wechselrichters (112) aus Gruppen von mindestens N+1 Zuständen des Wechselrichters (112) durchgeführt wird, wobei die mindestens N+1 Zustände des Wechselrichters (112) aus mindestens einer der Gruppen jeweils mindestens N+1 vorher festgelegten Vektoren (M1...M27) zugeordnet sind, von denen mindestens N von vorher festgelegen Phasenspannungen mit der Summe Null gebildet sind und von denen mindestens einer von vorher festgelegten Phasenspannungen mit der Summe ungleich Null gebildet ist.

10. Rechnerprogramm, umfassend Befehle, die die elektrische Anlage nach Anspruch 7 steuern, um die Schritte der Methode nach Anspruch 9 auszuführen.

## Claims

1. A control device (118) for an inverter (112) intended to be connected to a motor (104) having N phases (106, 108, 110) for having respectively applied N phase voltages (U, V, W) thereto, the N phase voltages (U, V, W) defining a vector space (Esp) each phase voltage (U, V, W) of which forms one dimension, N being higher than or equal to three, the inverter (112) being designed to assume several states in each of which it is designed to apply predetermined phase voltages to the phases (106, 108, 110) of the motor (104), the predetermined phase voltages of each state of the inverter (112) forming a predetermined vector (M1...M27) in the vector space (Esp), the control device (118) including:
- a unit for receiving, for a time interval, phase voltage setpoints forming a setpoint vector in the vector space (Esp),
- a unit for selecting at least N+1 states of the inverter (112) respectively associated with at least N+1 predetermined vectors (M1...M27) defining a volume in the vector space (Esp) containing the setpoint vector,
- a unit for controlling the inverter (112), over the time interval, to successively place it in the selected states, such that it substantially applies, on average over the time interval, the phase voltage setpoints,
the control device (118) being such that selecting of the at least N+1 states of the inverter (112) is carried out from groups of at least N+1 states of the inverter (112), the at least N+1 states of the inverter (112) of at least one of the groups being respectively associated with N+1 predetermined vectors (M1...M27) at least N of which are formed by zero-sum predetermined phase voltages and at least one of which is formed by non-zero sum predetermined phase voltages.

2. The control device (118) according to claim 1, wherein each group includes a state of the inverter (112) associated with the zero vector (M14) of the vector space (Esp) for which the predetermined phase voltages are all zero.

3. The control device (118) according to claim 1 or 2, wherein the volumes defined by the predetermined vectors (M1...M27) associated with the states of the inverter (112) of the groups are non-overlapping.

4. The control device (118) according to any of claims 1 to 3, wherein each group of states of the inverter (112) precisely includes N+1 states of the inverter (112).

5. The control device (118) according to any of claims 1 to 4, wherein at least one group of states of the inverter (112) precisely includes N-1 states respectively associated with N-1 predetermined vectors (M1...M27) each formed by predetermined phase voltages the sum of which is zero.

6. The control device (118) according to any of claims 1 to 5, wherein N is equal to three.

7. An electric facility (100) including:
- a inverter (112) for having connected to a motor (104) having N phases (106, 108, 110) for being respectively applied N phase voltages (U, V, W) thereto, the N phase voltages (U, V, W) defining a vector space (Esp) each phase voltage (U, V, W) of which forms one dimension, N being higher than or equal to three, the inverter (112) being designed to assume several states in each of which it is designed to apply predetermined phase voltages to the phases (106, 108, 110) of the motor (104), the predetermined phase voltages of each state of the inverter (112) forming a predetermined vector (M1...M27) in the vector space (Esp),
- a control device (118) for the inverter (112), according to any of claims 1 to 6.

8. The electric facility (100) according to claim 7, wherein the inverter (112) includes:
- a first terminal (114) and a second terminal (116) between which a D/C voltage (E) is to be applied,
- for each phase end, a switching arm (106A, 106B, 108A, 108B, 110A, 110B) including two switches connected to each other at a middle point (UA, UB, VA, VB, WA, WB) to which the phase end considered is to be connected, a first switch being connected to the first terminal (114), the second switch being connected to the second terminal (116),
each switch being designed to assume an open state and a closed state, each state of the inverter (112) being defined by a combination of states of the switches.

9. A control method (300) for a inverter (112) for being connected to a motor (104) having N phases (106, 108, 110), for having respectively applied N phase voltages (U, V, W) thereto, the N phase voltages (U, V, W) defining a vector space (Esp) each phase voltage (U, V, W) of which forms one dimension, N being higher than or equal to three, the inverter (112) being designed to assume several states in each of which it is designed to apply predetermined phase voltages to the phases (106, 108, 110) of the motor (104), the predetermined phase voltages of each state of the inverter (112) forming a predetermined vector (M1...M27) in the vector space (Esp), the control method (300) including:
- receiving, for a time interval, phase voltage setpoints forming a setpoint vector in the vector space (Esp),
- selecting at least N+1 states of the inverter (112) respectively associated with at least N+1 predetermined vectors (M1...M27) defining a volume in the vector space (Esp) containing the setpoint vector,
- controlling the inverter (112), over the time interval, to successively place it in the selected states, such that it substantially applies, on average over the time interval, the phase voltage setpoints,
the control method (300) being such that selecting the at least N+1 states of the inverter (112) is carried out from groups of at least N+1 states of the inverter (112), the at least N+1 states of the inverter (112) of at least one of the groups being respectively associated with at least N+1 predetermined vectors (M1...M27) at least N of which are formed by zero-sum predetermined phase voltages and at least one of which is formed by non-zero sum predetermined phase voltages.

10. A computer program comprising instructions which cause the electric facility according to claim 7 to run the steps of the method according to claim 9.
